# EUROPEAN PATENT APPLICATION

(11) **EP 1 734 502 A1**
(43) Date of publication of application: **20.12.2006**
(21) Application number: 05012634.1
(22) Date of filing: 13.06.2005
(51) Int. Cl.: G09G 3/34, G09G 3/32, H04M 1/22, H04N 9/73, H05B 33/08

(54) **Illumination in a portable communication device**

(71) Applicant: Sony Ericsson Mobile Communications AB, 221 88 Lund (SE)
(72) Inventor: Kleverman, Mats, 25443 Helsingborg (SE); Klinghult, Gunnar, 22731 Lund (SE)
(74) Representative: Dahnér, Christer

(57) **Abstract**

A light emitting device for a portable communication device, said light emitting device (1) comprising:
a first and second light source (2b,3b) said first and second light sources (2b,3b) providing light to be emitted,
at least a first image signal adjuster (2) for adjusting at least a signal level of a first light signal (2a) to the first light source (2b) corresponding to a first colour,
a measurement unit (5) for measuring each light component intensity,
and a control unit (6) arranged to control the emitted light in respect of intensity and/or colour.
In this way, the RGB LEDs intensity and colour can be adjusted to provide a white light. The ambient light intensity can be measured by using an optical sensor.

## Description

This invention relates to illumination in a portable communication device. In particular, the present invention relates to a light emitting device for a portable communication device, a portable communication device comprising the same light emitting device, and a corresponding method for emitting light.

In a portable communication device such as a cellular phone, white light emitting sources such as white light emitting diodes (LEDs) are used for illumination of colour displays and in some portable communication devices also for illumination of key board buttons. For illuminating a colour display, white LEDs are typically even required, but for the key board buttons they are only preferred, typically for higher priced products.

The white light can for instance be achieved by means of a blue LED that optically excites a phosphor providing red, blue and green phosphoresence that is perceived as white light. In this case, a drawback may be that the light spectrum of the LED and phosphor light spectrum change with ambient temperature and time, such that the white colour, or in other words, the white balance, inadvertently shifts into non-desired nuances, for instance the colour display appears too greenish to a user' preference, i. e. the white balance shifts.

Typically, this shift in white balance is hard to avoid or compensate for. Because of that, a plurality of colour LEDs is sometimes used instead of the above described blue LED, as will be disclosed in the following. Another reason for not using blue LEDs (or white LEDs) is that they are considerably more expensive than green and red ones.

For white light, only about 1/3 of the "expensive" blue LED intensity is used for blue light since about 2/3 is converted to red and green light. Furthermore, the efficiency of the conversion is not 100 % leading to higher power consumption than if for instance red and green light were provided by red and green LEDs for a given intensity.

Because of that, another way of producing white light is to utilize separate LEDs, typically red, green and blue LEDs in combination, which are excited simultaneously or in a time sequence providing light that is perceived as white light.

By using separate LEDs, calibration tables or in situ measurements could be employed for adjustment of the red, green and blue LEDs, whereby typically their intensities are adjusted.

Currently, this could be provided by in situ colour calibration using three detectors/sensors and three band pass filters (red, green and blue). However, also this solution suffers from drawbacks such as high cost, typically because of the expensive detector/filter devices.

Even if the background is disclosed with reference to white light only, similar problems are typically present in any light emitting device containing two or more light sources.

Thus, there is a great demand for a light emitting device for a portable communication device, such as a cellular phone, that is not temperature and/or time dependent, and/or expensive.

### SUMMARY OF THE INVENTION

One object of the present invention is thus directed towards providing a light emitting device for a portable communication device, which is not temperature and/or time dependent, and typically also fulfilling demands as regards to low cost and high performance.

According to a first aspect of the present invention, there is provided :
a light emitting device for a portable communication device, said light emitting device comprising:
   a first and second light source, said first and second light sources providing light to be emitted,
   at least a first image signal adjuster for adjusting at least a signal level of a first light signal to the first light source corresponding to a first colour,
   a measurement unit for measuring each light component intensity,
   and a control unit arranged to control the emitted light in respect of intensity and/or colour.

In this way, ambient light and each light component making up the emitted light can be measured by an optical sensor such that the LEDs intensity and colour, typically "whiteness" can be adjusted for light provided by at least two light sources.

According to a second aspect of the present invention, including the first aspect, said at least first signal adjuster is arranged to adjust depending on measuring information from the measurement unit.

According to a third aspect of the present invention, including the first or second aspect, said at least first adjuster is arranged to adjust a first, and second light signal so as to achieve a predetermined ratio among the signal levels, thereby providing a particular colour.

According to a fourth aspect of the present invention, including any one of the previous first or second aspects, said at least first adjuster is arranged to adjust a first, and a second light signal so as to achieve a predetermined ratio among the signal levels, thereby providing a particular colour.

According to a fifth aspect of the present invention, including the first aspect, there are provided a second image signal adjuster for adjusting a signal level of a second light signal to a second light source corresponding to a second colour, and a third image signal adjuster for adjusting a signal level of a third light signal to a third light source corresponding to a third colour.

According to a sixth aspect of the present invention, including the fifth aspect, said first, second and third light source signal adjusters are arranged to adjust gain or current.

According to a seventh aspect of the present invention, including any one of the previous aspects, the white light emitting device, further comprises a ambient light sensor, wherein said control unit is arranged to adjust dependent on ambient light intensity as well.

According to an eight aspect of the present invention, including any one of the previous aspects, said control unit is arranged to adjust dependent also on output changes, such as temperature changes, of the light sources.

According to a ninth aspect of the present invention, including any one of the previous aspects, the light emitting device further comprises a time measuring unit, wherein said control unit is arranged to adjust dependent also on a time parameter T.

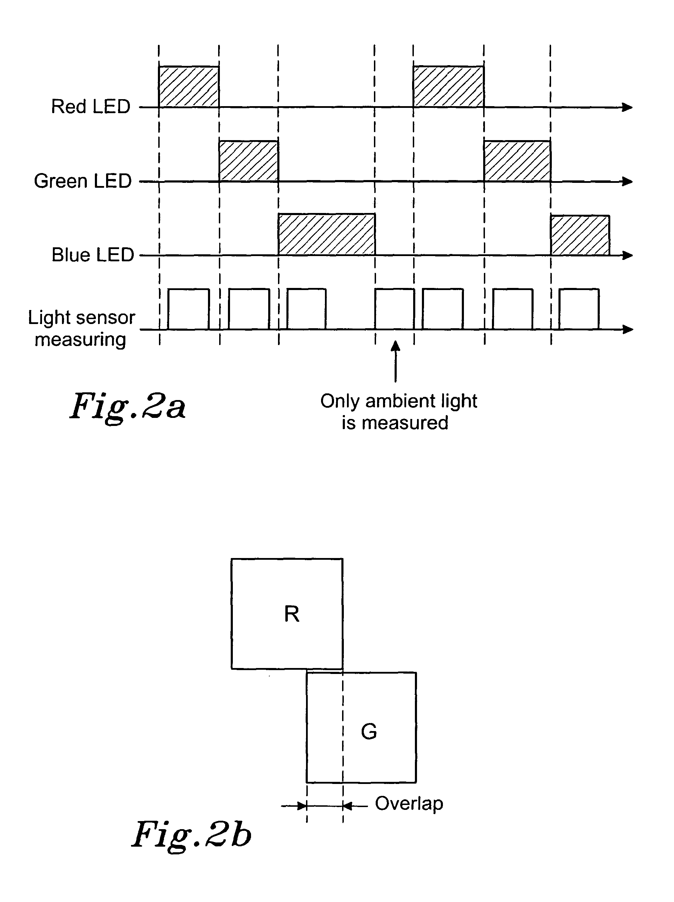

According to a tenth aspect of the present invention, including any one of the previous aspects, the light sources are arranged to operate in a time sequence, a so-called "field sequential mode" (see Fig. 2a for implementation).

According to an eleventh aspect of the present invention, including any one of the previous aspects, the light emitting device further comprises a user controlled customization unit arranged to control the emitted light in dependence of user input.

According to a twelveth aspect of the present invention, including the seventh aspect, said user controlled customization unit is arranged to control key board light.

According to a thirteenth aspect of the present invention, including any one of the previous aspects, the colours can be arranged for instance as 8, 12, 16, 18, 24 and 32 bit colour information that can be adjusted. However, any suitable resolution, including analogue non discrete resolution could alternatively be provided.

According to a fourteenth aspect of the present invention, including any one of the previous aspects, said control unit is arranged in a particular companion chip to the conventional circuitry of the portable communication device.

According to a fifteenth aspect of the present invention, including any one of the previous aspects, said control unit is provided as a software only solution.

According to a sixteenth aspect of the present invention, including any one of the previous aspects, said control unit is integrated in a display driver.

According to a seventeenth aspect of the present invention, including any one of the previous aspects, the sensor is embodied as a single optical sensor.

According to yet another aspect of the invention, there is also provided a portable electronic communication device comprising:
a light emitting device for a portable communication device, said light emitting device comprising:
   a first and second light source, said first and second light sources providing light to be emitted,
   at least a first image signal adjuster for adjusting at least a signal level of a first light signal to the first light source corresponding to a first colour,
   a measurement unit for measuring each light component intensity,
   and a control unit arranged to control the emitted light in respect of intensity and/or colour.

According to yet another aspect of the present invention, there is also provided a method for emitting light for a portable communication device, said method comprising the steps of:
- in a first step adjusting a signal level of at least a first light signal in at least a first signal adjuster to a first light source corresponding to a first colour,
- in a second step providing light to be transmitted from a first, and a second light source,
- in a third step, in a measurement unit measuring each transmitted light component intensity, and
- in a fourth step controlling the emitted light in respect of intensity and/or colour.

According to yet another embodiment of the present invention, in a fifth step, said at least first light signal is adjusted depending on measuring information from the measuring unit.

According to yet another aspect of the present invention, in a sixth step, said at least first signal adjuster is adjusted so as to achieve a predetermined ratio among a first and a second signal level, corresponding to a first and a second colour, thereby providing a particular colour of the emitted light.

The present invention has many advantages, one being that prior art white light emitting devices having conventional RGB LEDs including three detectors/filters are more costly than a light emitting device according to the present invention, and in that the problems with unpleasant appearance of the colours for instance of the key board will be eliminated, or at least could be reduced.

Another important advantage is that the present invention is easy to implement, is cheap and provide the user the possibility to personalise his/her portable communication device as regards for instance key board light colour and colour adjustment of display.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF DRAWING FIGURES

The present invention will now be described in more detail in relation to the enclosed drawings, in which:
Fig. 1a is a schematic and simplified block diagram of a light emitting device in a portable communication device according to an embodiment of the present invention.
Fig. 1b shows an alternative embodiment of the light emitting device shown in Fig. 1a.
Fig. 2a is a schematic diagram showing how separate red, green and blue diodes are excited in a time sequence, in a so-called "field sequential mode".
Fig. 2b is a schematic diagram showing how separate red, and green diodes are excited simultaneously.
Fig. 3 illustrates schematically/typically RGB intensity vs ambient light intensity, when typically a transflective display is utilized.
Fig. 4 is a schematic and simplified block diagram of a portable communication device provided with a light emitting device according to an embodiment of the present invention, provided with user customization of colour.
Fig. 5 is a flow chart of a method according to an embodiment of the present invention.

### DETAILED DESCRIPTION OF THE EMBODIMENTS

Referring now to the drawings, a description will be given in detail of embodiments in accordance with the present invention.

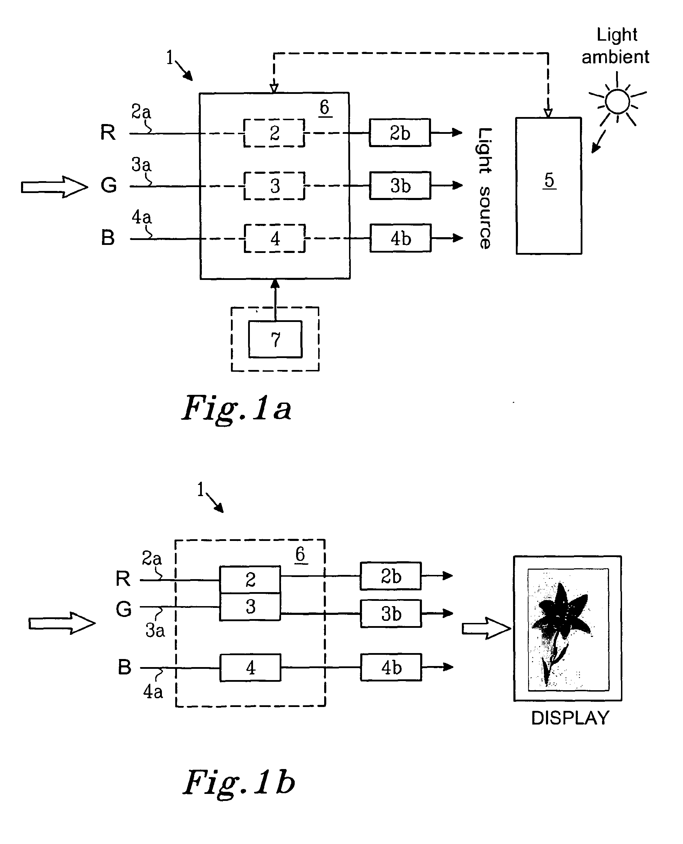

Fig. 1 shows a schematic and simplified block diagram of a light emitting device 1 in a portable communication device typically having one or more key boards and displays (not shown in this figure), according to an embodiment of the invention. The light emitting device 1 comprises a first light source signal adjuster 2, a second light source signal adjuster 3, and a third light source signal adjuster 4, for adjusting a first 2a, a second 3a, and a third 4a light signal corresponding to three primary colours red, green and blue, (R, G, B) to a first, a second and a third light source 2b, 3b, 4b, together providing light that is perceived as white light. The white light is intended to be used as white light for the colour displays (not shown) or the key boards (not shown) in a portable communication device (not shown) in a way known per se and is therefore not described in more detail in this figure. Even if Fig. 1 only illustrates emitting white light any other suitable light could be provided instead, thus not limited to three light sources such as the RGB diodes, but also two light sources only could be provided. The use thereof is also not restricted to the above mentioned parts of the portable communication device but any suitable application could be possible.

The first, second and third signal adjuster can also alternatively be provided in only one first signal adjuster, or alternatively two adjusters (see Fig. 2a). It is also possible that said at least one signal adjuster is arranged to adjust only one or two colours (signals). For instance, one colour may be fixed, and the other two colours can be adjusted by means of one or two adjusters.

In this embodiment of the invention, the light sources 2b, 3b, 4b are red, green, blue (RGB) diodes known per se, which are provided and arranged to emit light to light up the key board (and/or the display) of the portable communication device. However, the invention is not limited to RGB diodes, but also other suitable light sources such as cyan, magenta and yellow light sources could be provided instead.

The RGB diodes 2b, 3b, 4b can be excited in a time sequence, which is preferred and illustrated in Fig. 2a. They can also be partly overlapping, but enough separate to allow for intensity measurements of individual colours, which is illustrated in Fig. 2b

Now, referring to Fig. 1 again, the light emitting device 1 further comprises a measurement unit 5 arranged at a proper location (only schematically illustrated) in the portable communication device for measuring ambient light intensity and each light component coming from the light sources 2b, 3b, 4b. Even if Fig. 1 only illustrates a single measurement unit 5, separately arranged multiple measurement units may be provided instead of a single one.

The light emitting device 1 further comprises a control unit 6 arranged to control the emitted light in respect of intensity and/or colour. Preferably, the control unit 6 is arranged containing the light source signal adjusters 2, 3, 4 or at least communicating with them in a suitable way. The measurement of ambient light intensity by means of the measurement unit 5 is used to control the display and/or key board light intensity for optimized usability and power consumption, i. e. the emitted white light.

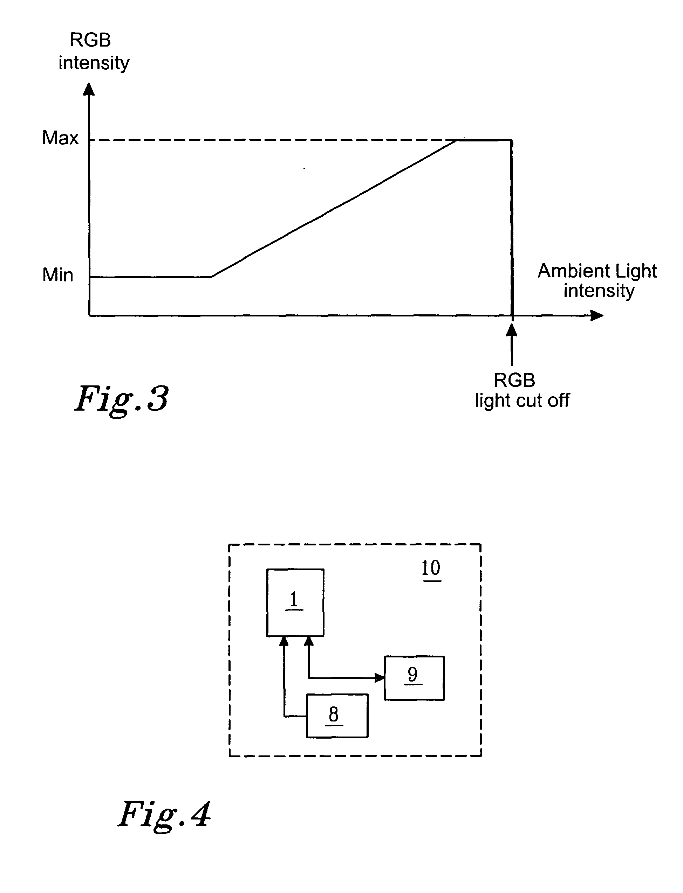

In this way, ambient light and each emitted light component (from the RGB light sources 2b, 3b, 4b) together making up the white emitted light can be measured by a single optical sensor such that the RGB LEDs intensity and "whiteness" can be adjusted by means of the control unit 6. This is illustrated in Fig. 3 showing RGB intensity versus ambient light intensity for typically a transflective display. When ambient light increases, RGB intensity also increases up to a cut off level as illustrated by means of an arrow.

Preferably, said first, second and third light source signal adjusters 2, 3, 4 are arranged to adjust said first, second and third light signal 2a, 3a, 4a so as to achieve a predetermined ratio among the signal levels, thereby providing a particular whiteness of the colour. This can be provided as a table of relative intensities and possibly function of temperature.

Typically the first, second and third light source signal adjusters 2, 3, 4 are arranged to adjust gain (or current) of their respective light source signals 2a, 3a, 4a.

The adjustment will depend on parameters like temperature changes of the LEDs, the LEDs colours change over time, ambient light change or on which pictures are shown on the display (in case of white light provided for a colour display). All parameters can be taken into account by means of using the measurement unit 5, but also can also be embodied for instance by means of additional features such as a temperature sensor 7 close to the RGB light sources or some time T control, preferably implemented in the control unit. The temperature sensor 7 can be arranged at any suitable location, and does not have to be part of the light emitting device. It is also possible to use an already existing temperature sensor.

The colours can be arranged for instance as 8, 12, 16, 18, 24 and 32 bit colour information that can be adjusted. However, any suitable resolution, including analogue non discrete resolution could alternatively be provided.

Preferably, the adjusters 2, 3, and 4 are arranged to adjust their respective signals 2a, 3a, and 4a individually, so as to achieve a predetermined ratio among the adjusted signals. In Fig. 1, the image signal adjusters 2, 3 and 4 are represented as separate units receiving separate control signals (in a way known per se).

A coarse adjustment is often preferred since it eliminates the need for complicated processing circuitry, which may reduce processing speed such that a quick adjustment cannot be achieved.

The invention implies a great number of advantages over prior art, since for instance, for white LEDs, only about 1/3 of the "expensive" blue LED intensity is used for blue light, since about 2/3 is converted to red and green light. Furthermore, the efficiency of the conversion is not 100 %, leading to higher current consumption than if for instance red and green light were provided by red and green LEDs for a given intensity instead.

Preferably, the invention provides in situ colour measurements and calibrations by a single optical detector (but not limited thereto) and no expensive optical filters are therefore required. Typically, only about 1/3 of the current is required for the blue light, which implies that smaller and consequently cheaper DC/DC converters can be employed compared to conventional technology for instance using the blue LED as described above. Though, more complex switching circuitry for the field sequential mode might be required.

Moreover, the power consumption will be lower because of the higher efficiency of the RGB LED compared to a conventional white LED. Thus, the power conversion circuitry can be made more simple and cheaper since the power required is lower.

The power conversion circuitry and switching circuitry are not illustrated, nor described in more detail herein, since the application thereof is evident for the skilled person.

Yet another advantage with the invention is that even more "white" light will be possible to obtain since parameters such as temperature change of the LEDs, the LEDs colour change over time, ambient light change or the picture colours are taken into account.

Moreover, some users do not like the appearance of the colours in display. Typically, to the user, the appearance of the colours seems to change from device to device, i. e., for instance the user of a cellular phone believes that his/her friend has a "better" colour appearance in the display, for instance not so greenish, even if similar cellular phone models are compared. One reason to this is that there is a tolerance in the white LEDs white point illuminating the display. Typically, the tolerance has to exist because of cost and other issues for instance depending on the supplier of the LEDs. However, regardless of reason, this difference (i. e. tolerance) can cause problems in that images shown on the display will have different colour appearances since the displays have different white points. Thus, even if key board light customization is described and preferred also white balance of the display could be user controlled in a similar way.

According to an other embodiment of the invention, it is also possible for a user to customize for instance key board light depending on user input from a user of the portable communication device according to his/her preference.

This will be described in more detail below with reference to Fig. 4, illustrating a portable communication device 10 comprising the white light emitting device 1 described above, further provided with a user controlled customization unit 9 arranged to control the emitted white light in dependence of user input.

For instance, if a user thinks his/her cellular phone display is to yellowish, the user selects a white balance adjustment function provided as selectable numerical values for each colour, for instance provided as a colour bar in a menu system in a way known per se. Depending on which white balance value the user likes, he/she can either increase the blue colour or decrease red and green a couple of steps. In a similar way, also key board light, as well as intensity can be adjusted.

The light emitting device 1 may also further comprise a time measuring unit 8, wherein said control unit 5 is arranged to adjust dependent also on a time parameter T.

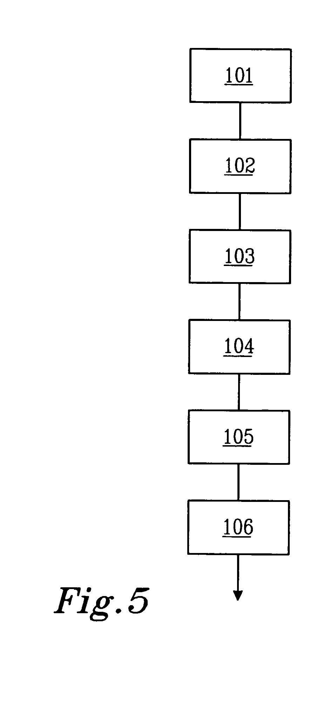

In Fig. 5, there is further illustrated a flow chart of a method for emitting light for a portable communication device according to an embodiment of the present invention.

The method comprises the steps of:
- in a first step 101 adjusting a signal level of at least a first light signal 2a in at least a first signal adjuster to a first light source corresponding to a first colour,
- in a second step 102 providing light to be transmitted from a first, and a second light source,
- in a third step 103, in a measurement unit measuring each transmitted light component intensity, and
- in a fourth step 104 controlling the emitted light in respect of intensity and/or colour.

Then, in a fifth step 105, said at least first light signal 2a is adjusted depending on measuring information from the measuring unit, and finally in a sixth step 106, said at least first signal adjuster is adjusted so as to achieve a predetermined ratio among a first, a second and a third level, corresponding to a first, a second and a third colour, thereby providing a particular whiteness of the colour.

The above described embodiment is an example, and various modifications can be made without departing from the spirit and scope of the invention. Thus, even if many of the advantages of the invention is described in relation to white light emitting devices, the invention is by no means limited to white light applications, but any application comprising two or more light sources.

It should also be realised that a cellular phone is just one type of communication device in which the invention can be implemented. It can just as well be provided in other types of portable electronic equipments such as a lap top computer, a palm top computer, an electronic organizer, a smart-phone, a communicator, or a music playing device.

There are more ways in which the invention can be varied. Therefore the invention is only to be limited by the accompanying claims.

## Claims

1. A light emitting device for a portable communication device, said light emitting device (1) comprising:
a first and second light source (2b, 3b), said first and second light sources (2b, 3b) providing light to be emitted,
at least a first image signal adjuster (2) for adjusting at least a signal level of a first light signal (2a) to the first light source (2b) corresponding to a first colour,
a measurement unit (5) for measuring each light component intensity,
and a control unit (6) arranged to control the emitted light in respect of intensity and/or colour.

2. The light emitting device of claim 1, wherein said at least first signal adjuster (2) is arranged to adjust depending on measuring information from the measurement unit (5).

3. The light emitting device of claim 1 or 2, wherein said at least first adjuster (2) is arranged to adjust a first, and second light signal (2a, 3a) so as to achieve a predetermined ratio among the signal levels, thereby providing a particular colour.

4. The light emitting device of claim 1 or 2, wherein said at least first adjuster (2) is arranged to adjust a first, a second and third light signal (2a, 3a, 4a), said third light signal (4a) coming from a third light source (4b) so as to achieve a predetermined ratio among the signal levels, thereby providing a particular colour.

5. The light emitting device of claim 1, further comprising
a second image signal adjuster (3) for adjusting a signal level of a second light signal (3a) to a second light source (3b) corresponding to a second colour,
and a third image signal adjuster (4) for adjusting a signal level of a third light signal (4a) to a third light source (3b) corresponding to a third colour.

6. The light emitting device of claim 5, wherein said first, second and third light source signal adjusters (2, 3, 4) are arranged to adjust gain or current.

7. The light emitting device of any one of the claims 1-6, further comprising a ambient light sensor (7a), wherein said control unit is arranged to adjust dependent on ambient light intensity as well.

8. The light emitting device of any one of the claims 1-7, further comprising a temperature sensor (7b), wherein said control unit (6) is arranged to adjust dependent also on temperature changes of the light sources (2b, 3b, 4b).

9. The light emitting device of any one of the previous claims 1-8, further comprising a time measuring unit (8), wherein said control unit (5) is arranged to adjust dependent also on a time parameter (T).

10. The light emitting device of any one of the previous claims, wherein the light sources (2b, 3b, 4b) are arranged to operate in a field sequential mode.

11. The light emitting device of any one of the previous claims, further comprising a user controlled customization unit (9) arranged to control the emitted light in dependence of user input.

12. The light emitting device of claim 11, wherein said user controlled customization unit (9) is arranged to control key board light.

13. The light emitting device of any one of the previous claims, wherein the colours can be arranged as 8, 12, 16, 18, 24 and 32 bit colour information that can be adjusted.

14. The light emitting device of any one of the previous claims, wherein said control unit (6) is arranged in a particular companion chip to the conventional circuitry of the portable communication device (10).

15. The light emitting device of any one of the previous claims 1-15, wherein said control unit (6) is provided as a software only solution.

16. The light emitting device of any one of the previous claims 1-15, wherein said control unit (6) is integrated in a display driver.

17. The light emitting device of any one of the previous claims 1-16, wherein the sensor (5) is embodied as a single optical sensor.

18. A portable electronic communication device comprising a light emitting device (1) according to any one of the previous claims 1-17.

19. A method for emitting light for a portable communication device, said method comprising the steps of:
- in a first step (101) adjusting a signal level of at least a first light signal (2a) in at least a first signal adjuster to a first light source corresponding to a first colour,
- in a second step (102) providing light to be transmitted from a first, and a second light source,
- in a third step (103), in a measurement unit measuring each transmitted light component intensity, and
- in a fourth step (104) controlling the emitted light in respect of intensity and/or colour.

20. The method of claim 19, wherein in a fifth step (105), said at least first light signal (2a) is adjusted depending on measuring information from the measuring unit.

21. The method of claim 19 or 20, wherein in a sixth step (106), said at least first signal adjuster is adjusted so as to achieve a predetermined ratio among a first and a second signal level, corresponding to a first and a second colour, thereby providing a particular colour of the emitted light.
